# EUROPEAN PATENT SPECIFICATION

(11) **EP 2 216 535 B1**
(45) Date of publication and mention of the grant of the patent: **29.05.2013**
(21) Application number: 08854837.5
(22) Date of filing: 20.11.2008
(51) Int. Cl.: F02G 1/053, F16C 32/06

(54) **PISTON ENGINE AND STERLING ENGINE**
KOLBENMOTOR UND STIRLINGMOTOR
MOTEUR À PISTON ET MOTEUR STERLING

(30) Priority: 29.11.2007 JP 2007309369
(43) Date of publication of application: 11.08.2010
(73) Proprietor: TOYOTA JIDOSHA KABUSHIKI KAISHA, Toyota-shi, Aichi-ken, 471-8571 (JP)
(72) Inventor: YAGUCHI, Hiroshi, Toyota-shi Aichi 471-8571 (JP); SAWADA, Daisaku, Toyota-shi Aichi 471-8571 (JP); KATAYAMA, Masaaki, Toyota-shi Aichi 471-8571 (JP)
(74) Representative: TBK
(86) International application number: PCT/JP2008/071150
(87) International publication number: WO 2009/069530

(56) References cited:
- JP-A- 57 012 267
- JP-A- 60 085 279
- JP-A- 2006 183 566
- US-A1- 2004 168 438

## Description

### TECHNICAL FIELD

The present invention relates to a piston engine and a Stirling engine in which pistons make reciprocating motions in cylinders without using piston rings and a lubricant.

### BACKGROUND ART

Recently, attention has been paid to a Stirling engine which is excellent in theoretical heat efficiency to recover exhaust heat from an internal combustion engine mounted on a vehicle such as a passenger car, a bus, and a truck and exhaust heat from a factory. Patent Document 1 discloses a Stirling engine in which gas bearings are interposed between pistons and cylinders as well as the pistons are supported by approximately linear mechanisms and reciprocatingly moved.

Patent Document 1: Japanese Patent Application Laid-open No. 2005-106009 ([0013], FIGS. 1 and 5)

### DISCLOSURE OF INVENTION

### PROBLEMS TO BE SOLVED BY THE INVENTION

Incidentally, in a Stirling engine, since apexes surface of pistons are in contact with a working fluid, apexes of the pistons, which are particularly in contact with a high temperature working fluid, thermally expand. When gas bearings are interposed between pistons and cylinders as in the Stirling engine disclosed in Patent Document 1, minute clearances must be formed between the pistons and the cylinders. Accordingly, when the pistons thermally expand while the Stirling engine is in operation, in view of the above problem, is to reduce a possibility of contact between pistons and cylinders when gas bearings are interposed between the pistons and the cylinders.

### MEANS FOR SOLVING PROBLEM

In an unclaimed solution a piston engine includes cylinders including sleeves into which a working fluid flows and which are thermally connected to a heater, the working fluid being passed through the heater that heats the working fluid; pistons that make reciprocating motions in the sleeves by a pressure change of the working fluid; and gas bearings formed between inner peripheral surfaces of the sleeves and outer peripheral surfaces of the pistons, the inner peripheral surfaces of the sleeves and the outer peripheral surfaces of the pistons being disposed in confrontation with each other.

The above mentioned object is solved by a piston engine according to claim 1. In particular, the piston engine includes cylinders including sleeves into which a working fluid flows and which are thermally connected to a heater, and outer shells disposed outside of the sleeves, the working fluid being passed through the heater that heats the working fluid; pistons that make reciprocating motions in the sleeves by a pressure change of the working fluid; and gas bearings formed between inner peripheral surfaces of the sleeves and outer peripheral surfaces of the pistons, the inner peripheral surfaces of the sleeves and the outer peripheral surfaces of the pistons being disposed in confrontation with each other.

In an unclaimed solution a piston engine includes cylinders composed of a double structure including sleeves into which a working fluid flows and outer shells disposed outside of the sleeves, the working fluid being passed through the heater that heats the working fluid; pistons that make reciprocating motions in the sleeves by a pressure change of the working fluid; and gas bearings formed between inner peripheral surfaces of the sleeves and outer peripheral surfaces of the pistons, the inner peripheral surfaces of the sleeves and the outer peripheral surfaces of the pistons being disposed in confrontation with each other.

As a preferred aspect of the present invention, in the piston engine, it is preferred that portions where at least the gas bearings can be formed have a double structure in which the outer shells are disposed outside of the sleeves.

It is preferred that the sleeves and the outer shells are composed of a different structural member, respectively, and sleeve support portions are disposed to ends of the sleeves on the heater side; and the sleeves are attached to the outer shells by attaching the sleeve support portions to one end of the outer shells, and the sleeves are coupled with the heater.

In an unclaimed solution in the piston engine, it is preferred that the sleeves are not in contact with the outer shells through metal in portions where the gas bearings are formed.

As a preferred aspect of the present invention, in the piston engine, it is preferred that the sleeves and the outer shells are disposed at predetermined intervals.

As a preferred aspect of the present invention, in the piston engine, it is preferred that the outer shells support a force which acts on the cylinders and is in a direction parallel to a center axis of the cylinder, and the sleeves receive a pressure of the working fluid existing in the sleeves.

In order to achieve the above mentioned object, a Stirling engine according to the present invention includes a heat exchanger including a heater that heats a working fluid, a regenerator that is connected to the heater and a heat exchanger including a heater that heats a working fluid, a regenerator that is connected to the heater and through which the working fluid passes, and a cooler that is connected to the regenerator and cools the working fluid; cylinders including sleeves into which the working fluid passed through the heater flows and thermally connected to the heater, and outer shells disposed outside of the sleeves; pistons that make reciprocating motions in the sleeves by a pressure change of the working fluid; and gas bearings that are formed between inner peripheral surfaces of the sleeves and outer peripheral surfaces of the pistons, the inner peripheral surfaces of the sleeves and the outer peripheral surfaces of the pistons being disposed in confrontation with each other.

As a preferred aspect of the present invention, in the Stirling engine, it is preferred that portions where at least the gas bearings can be formed have a double structure in which the outer shells are disposed outside of the sleeves.

As a preferred aspect of the present invention, in the Stirling engine, it is preferred that the pistons are supported by approximately linear mechanisms.

As a preferred aspect of the present invention, in the Stirling engine, it is preferred that when the Stirling engine includes a plurality of cylinders and a plurality of pistons, at least one of the cylinders thermally connects between the heater and the sleeves; and
at least the one of the cylinders is composed of a double structure having the sleeve and an outer shell disposed outside of the sleeve.

### EFFECT OF THE INVENTION

When gas bearings are interposed between pistons and cylinders, the present invention can reduce a possibility that the pistons are in contact with the cylinders.

### BRIEF DESCRIPTION OF THE DRAWINGS

[FIG. 1] FIG. 1 is a sectional view illustrating a configuration of a Stirling engine as a piston engine according to an embodiment.
[FIG. 2] FIG. 2 is an explanatory view illustrating a configuration example of a gas bearing included in the Stirling engine as the piston engine according to the embodiment and a support structure of the piston.
[FIG. 3] FIG. 3 is an explanatory view illustrating a configuration of a high temperature side cylinder included in the Stirling engine as the piston engine according to the embodiment.
[FIG. 4] FIG. 4 is plan view of a heater/cylinder coupling member when it is viewed from a high temperature side working space side.
[FIG. 5] FIG. 5 is a sectional view of a sleeve configuring a high temperature side piston.
[FIG. 6] FIG. 6 is an explanatory view illustrating another configuration of the high temperature side cylinder included in the Stirling engine as the piston engine according to the embodiment.
[FIG. 7] FIG. 7 is a schematic view illustrating a configuration example when the Stirling engine according to the embodiment is used to recover exhaust heat from an internal combustion engine.

### EXPLANATION OF LETTERS OF NUMERALS

20 Piston
20B Counter apex surface side end
20H High temperature side piston
20L Low temperature side piston
20S Side peripheral surface
20T Apex surface
30 Cylinder
30H High temperature side cylinder
30HB, 30LB Cylinder block
30HR, 30LR Sleeve
30L Low temperature side cylinder
31 Counter heater side end
32 Sleeve support portion
40 Gasket
41 Positioning member
42 Radiation suppressing member
60 Grasshopper mechanism (approximately linear mechanism)
100 Stirling engine
100C Housing
105 Heater
106 Regenerator
107 Cooler
108 Heat exchanger
110 Crank shaft
111 Base plate
120 Heater/cylinder coupling member
120B Counter heater side end
121 Cooler/cylinder coupling member

### BEST MODE(S) FOR CARRYING OUT THE INVENTION

The present invention will be explained below in detail referring to the drawings. Note that the present invention is by no means limited by the best mode for carrying out the present invention (hereinafter, referred to as an embodiment). Further, components of the following embodiment include components that can be easily conceived by a person skilled in the art, substantially the same components, and components within a so-called equivalent range.

Note that a Stirling engine that is an external combustion engine will be explained below as an example of a piston engine. Although the piston engine is preferably the external combustion engine in the embodiment as described above, the piston engine is not limited to the external combustion engine. Further, although an example, in which exhaust heat from an internal combustion engine mounted on a vehicle and the like is recovered using the Stirling engine as the piston engine, will be explained, a target from which exhaust heat is recovered is not limited to the internal combustion engine. The present invention can be also applied to a case in which exhaust heat from, for example, a factory, a plant, and a power generation facility is recovered.

The embodiment is a piston engine having gas bearings interposed between pistons and cylinders and has a feature in that the embodiment includes sleeves into which a working fluid of the piston engine, which has passed through a heater for heating the working fluid, flows and the sleeves are thermally connected to the heater. Further, in the embodiment, outer shells are disposed outside of the sleeves, and the cylinders are configured in a double structure of the sleeves and the outer shells.

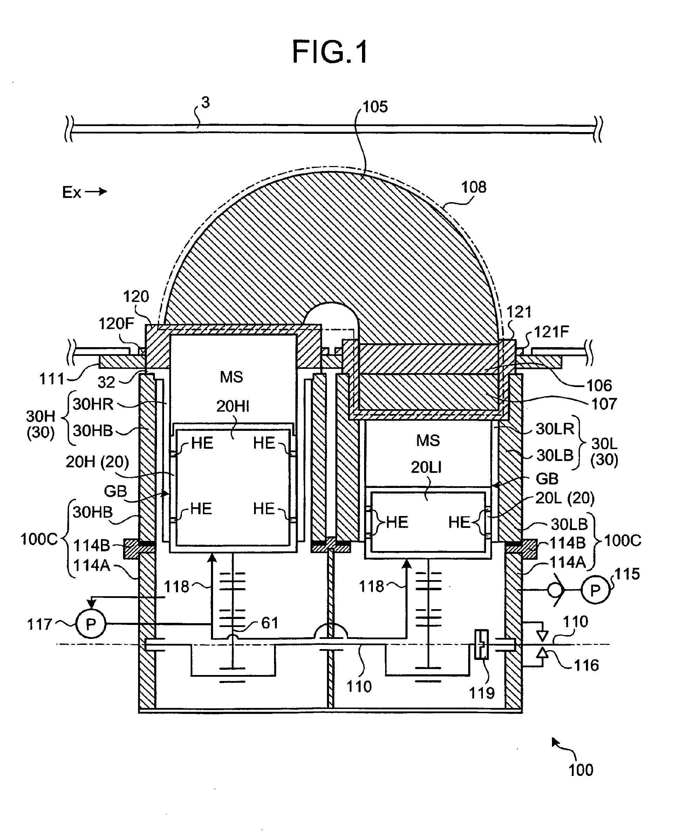

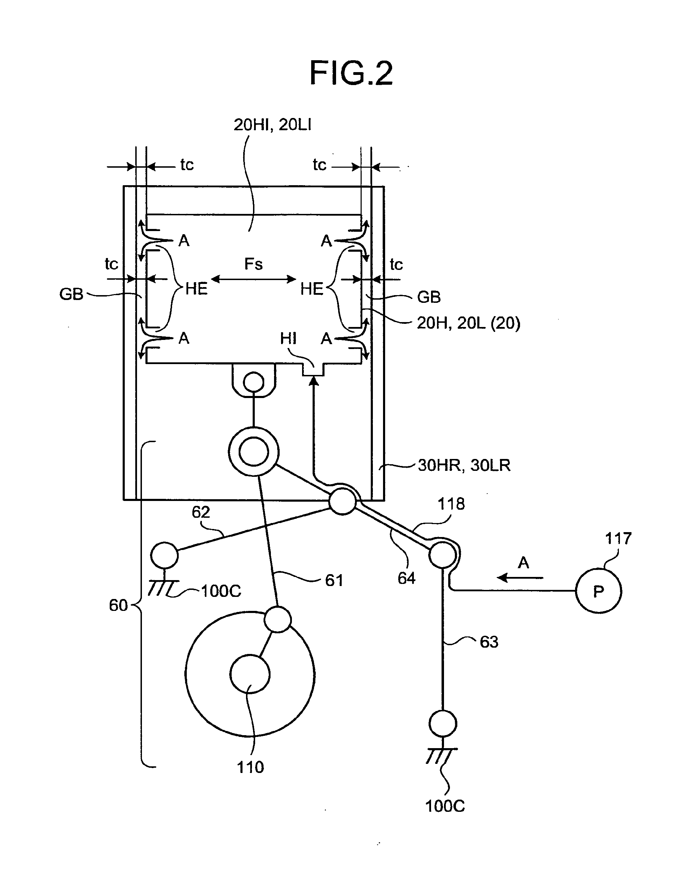

FIG. 1 is a sectional view illustrating a configuration of the Stirling engine as the piston engine according to the embodiment. FIG. 2 is an explanatory view illustrating a configuration example of the gas bearing included in the Stirling engine as the piston engine according to the embodiment and a support structure of the piston. A Stirling engine 100 as the piston engine according to the embodiment is a so-called α type parallel two-cylinder Stirling engine. The parallel two-cylinder is configured such that two cylinders are arranged in a direction parallel with a rotating shaft of a crank shaft 110 as an output shaft of the Stirling engine 100. In the embodiment, the Stirling engine 100 disposes a heat exchanger 108 to a heater case 3 acting as a path through which an exhaust gas Ex from an internal combustion engine is caused to pass and is used as an exhaust heat recover device for recovering heat energy from the exhaust gas Ex of the internal combustion engine.

The Stirling engine 100 includes a high temperature side piston 20H accommodated in a high temperature side cylinder 30H and a low temperature side piston 20L accommodated in a low temperature side cylinder 30L, and the high temperature side piston 20H is disposed in series with the low temperature side piston 20L. The heat exchanger 108 is disposed between the high temperature side cylinder 30H and the low temperature side cylinder 30L. Note that, in the following description, when the high temperature side cylinder 30H and the low temperature side cylinder 30L are not discriminated from each other, they are called a cylinder 30, and when the high temperature side piston 20H and the low temperature side piston 20L are not discriminated from each other, they are called a piston 20.

The high temperature side cylinder 30H and the low temperature side cylinder 30L are directly or indirectly supported by and fixed to a base plate 111 as a reference member. In the Stirling engine 100 according to the embodiment, the base plate 111 acts as a position reference of respective components of the Stirling engine 100. With this configuration, the relative positional accuracies of the respective components can be secured. Further, as described later, the Stirling engine 100 according to the embodiment has gas bearings GB between the high temperature side cylinder 30H and the high temperature side piston 20H and between the low temperature side cylinder 30L and the low temperature side piston 20L.

The high temperature side cylinder 30H is composed of the double structure including a sleeve 30HR as a cylindrical structural member and a cylinder block 30HB as the outer shell disposed outside of an outer peripheral portion of the sleeve 30HR. The sleeve 30HR has the high temperature side piston 20H disposed therein with a result that an inner peripheral surface of the sleeve 30HR and an outer peripheral surface of the high temperature side piston 20H are disposed in confrontation with each other. The gas bearing GB is formed between the sleeve 30HR and the high temperature side piston 20H, and the high temperature side piston 20H makes a reciprocating motion in the sleeve 30HR while being supported in the sleeve 30HR through the gas bearing GB.

A working space (high temperature side working space) MSH, in which the working fluid of the Stirling engine 100 exists, is formed in the sleeve 30HR. The high temperature side working space MSH is a space surrounded by an inner surface of the sleeve 30HR, an apex surface of the high temperature side piston 20H, and an end of a heater 105 connected to the high temperature side cylinder 30H.
In the embodiment, the working fluid of the Stirling engine 100 is air. The working fluid, which has passed through the heater 105 for heating the working fluid, flows into the sleeve 30HR, that is, into the high temperature side working space MSH. Further, the working fluid flows into the heater 105 from the high temperature side working space MSH. The high temperature side piston 20H makes the reciprocating motion in the sleeve 30HR by a pressure change of the working fluid in the high temperature side working space MSH.

The low temperature side cylinder 30L is composed of a sleeve 30LR as a cylindrical structural member and a cylinder block 30LB as the outer shell disposed outside of the outer peripheral portion of the sleeve 30LR. Note that the sleeve 30LR and the cylinder block 30LB may be composed of the same structural member without disposing the sleeve 30LR. The low temperature side piston 20L is disposed in the sleeve 30LR so that an inner peripheral surface of the sleeve 30LR is disposed in confrontation with an outer peripheral surface of the low temperature side piston 20L. The gas bearing GB is formed between the sleeve 30LR and the low temperature side piston 20L, and the low temperature side piston 20L is supported in the sleeve 30LR by the gas bearing GB and makes a reciprocating motion in the sleeve 30LR.

A working space (low temperature side working space) MSL, in which the working fluid of the Stirling engine 100 exists, is formed in the sleeve 30LR. The low temperature side working space MSL is a space surrounded by an inner surface of the sleeve 30LR, an apex surface of the low temperature side piston 20L, and an end of a cooler 107 connected to the low temperature side cylinder 30L. The working fluid, which has passed through the cooler 107 for cooling the working fluid, flows into the sleeve 30LR, that is, into the low temperature side working space MSL. Further, the working fluid flows into the cooler 107 from the low temperature side working space MSL. The low temperature side piston 20L makes a reciprocating motion in the sleeve 30LR by a pressure change of the working fluid in the low temperature side working space MSL.

The Stirling engine 100 indirectly attaches the high temperature side cylinder 30H and the low temperature side cylinder 30L to the base plate 111 as the reference member. With this configuration, a clearance between the piston 20 and the cylinder 30 can be accurately kept by securing a position accuracy between the piston 20 and the cylinder 30 using the base plate 111. With this configuration, a function of the gas bearing GB can be sufficiently exhibited. Further, the Stirling engine 100 can be also easily assembled. Note that the high temperature side cylinder 30H and the low temperature side cylinder 30L may be directly attached to the base plate 111.

The heat exchanger 108, which is composed of an approximately U-shaped heater (heating device) 105, a regenerator 106, and the cooler 107, is disposed between the high temperature side cylinder 30H and the low temperature side cylinder 30L. The heater 105 can be easily disposed also to a relatively narrow space such as an exhaust gas path of an internal combustion engine by forming the heater 105 in the approximately U-shape as described above. Further, when the high temperature side cylinder 30H and the low temperature side cylinder 30L are disposed in series as in the Stirling engine 100, the heater 105 can be relatively easily disposed in a cylindrical space such as an exhaust gas path of the internal combustion engine.

One end of the heater 105 is disposed on the high temperature side cylinder 30H side, and the other end of the heater 105 is disposed on the regenerator 106 side. One end of the regenerator 106 is disposed on the heater 105 side and the other end of the regenerator 106 is disposed on the cooler 107 side, and the working fluid, which flows in from the heater 105 or the cooler 107, passes through the regenerator 106. One end of the cooler 107 is disposed on the regenerator 106 side, and the other end of the cooler 107 is disposed on the low temperature side cylinder 30L side.

A heater/cylinder coupling member 120 is attached to an end of the heater 105 disposed on the high temperature side cylinder 30H side. The heater/cylinder coupling member 120 is composed of a good heat conductor such as metal and constitutes a part of the heater 105. An end of the heater/cylinder coupling member 120 opposite to a side thereof connected to the heater 105 is attached to the high temperature side cylinder 30H, and, more specifically, to the sleeve 30HR that constitutes the high temperature side cylinder 30H. With this configuration, the heater 105 is connected to the high temperature side cylinder 30H through the heater/cylinder coupling member 120. While the Stirling engine 100 is in operation, the working fluid, which has passed through the heater 105, flows into the high temperature side cylinder 30H as well as the working fluid in the high temperature side cylinder 30H flows into the heater 105.

A cooler/cylinder coupling member 121 is attached to an end of the cooler 107 disposed on the low temperature side cylinder 30L side. An end of the cooler/cylinder coupling member 121 opposite to a side thereof connected to the cooler 107 is attached to the low temperature side cylinder 30L. With this configuration, the cooler 107 is connected to the low temperature side cylinder 30L through the cooler/cylinder coupling member 121. While the Stirling engine 100 is in operation, the working fluid, which has passed through the cooler 107, flows into the low temperature side cylinder 30L as well as the working fluid in the low temperature side cylinder 30L flows into the cooler 107.

The heater/cylinder coupling member 120 is attached to the base plate 111 through a flange 120F expanding to an outer peripheral portion of the heater/cylinder coupling member 120. With this configuration, the high temperature side cylinder 30H is attached to the base plate 111 through the heater/cylinder coupling member 120. The cooler/cylinder coupling member 121 is attached to the base plate 111 through a flange 121F expanding to an outer peripheral portion of the cooler/cylinder coupling member 121. With this configuration, the low temperature side cylinder 30L is attached to the base plate 111 through the cooler/cylinder coupling member 121.

The heater 105 heats the working fluid of the Stirling engine 100. The cooler 107 cools the working fluid. The working fluid, which has passed through the heat exchanger 108, flows into and flows out from the high temperature side cylinder 30H and the low temperature side cylinder 30L. The working fluid is contained in the sleeve 30HR of the high temperature side cylinder 30H, in the sleeve 30LR of the low temperature side cylinder 30L, and in the heat exchanger 108, and a Stirling cycle is formed by the heat supplied from the heater 105 to thereby drive the Stirling engine 100.

For example, the heater 105 and the cooler 107 can be formed by bundling a plurality of tubes of a material having a high thermal conductivity and an excellent heat resistance. The cooler 107 may be cooled by air or by water. Further, the regenerator 106 is composed of, for example, a porous heat accumulating member. Note that the configurations of the heater 105, the cooler 107, and the regenerator 106 are not limited to those exemplified above, and preferable configurations can be selected according to a heat condition of an exhaust heat recovery target, a specification of the Stirling engine 100, and the like.

As described above, the high temperature side piston 20H and the low temperature side piston 20L are supported in the high temperature side cylinder 30H and the low temperature side cylinder 30L through the gas bearings GB. That is, this is a structure for supporting the high temperature side piston 20H and the low temperature side piston 20L in the cylinders 30H and 30L without through piston rings and without using a lubricant. With this configuration, efficiency of the Stirling engine 100 can be improved by reducing friction between the piston 20 and the cylinder 30. Further, even when the Stirling engine 100 is used under the operating condition of, for example, a low heat source and a low temperature difference as in a case of recovering exhaust heat from an internal combustion engine, heat energy can be recovered from the exhaust heat by the Stirling engine 100 by reducing friction between the piston 20 and the cylinder 30.

To constitute the gas bearings GB, predetermined clearances tc are formed between the high temperature side piston 20H and the low temperature side piston 20L and the sleeves 30HR, 30LR as illustrated in FIG. 2. The clearance tc is formed in several microns to several tens of microns around an entire periphery of the piston 20. The reciprocating motions of the high temperature side piston 20H and the low temperature side piston 20L are transmitted to the crank shaft 110 as an output shaft by a connecting rod 61 and converted to a rotational motion by the crank shaft 110.

Since the gas bearing GB has a low capability (load capability) for withstanding force in a diameter direction (lateral direction, thrust direction) of the piston 20, it is preferable to set side force Fs of the piston 20 to substantially 0. Accordingly, a high linear motion accuracy of the piston 20 to the axial line (center axis) of the cylinder 30 is required. To realize the high linear motion accuracy, in the embodiment, the high temperature side piston 20H and the low temperature side piston 20L are supported by approximately linear mechanisms (for example, grasshopper mechanisms) 60 illustrated in FIG. 2. The high temperature side piston 20H and the low temperature side piston 20L make approximately linear reciprocating motions by the approximately linear mechanisms 60 as well as the reciprocating motions are transmitted to the crank shaft 110 through the connecting rod 61. With this operation, the reciprocating motions of the high temperature side piston 20H and the low temperature side piston 20L supported by the approximately linear mechanisms 60 are converted to a rotating motion by the crank shaft 110, and the rotating motion is taken out as an output of the Stirling engine 100. More specifically, the Stirling engine 100 obtains the output by converting the reciprocating motions of the high temperature side piston 20H and the low temperature side piston 20L supported by the approximately linear mechanisms 60 to the rotating motion by the crank shaft 110.

In the embodiment, for example, almost all the side force Fs is supported by the approximately linear mechanisms 60, and the side force Fs, which is generated when the reciprocating motion of the piston 20 is away from an approximately linear motion, is supported by the gas bearing GB. In the embodiment, the grasshopper mechanisms are used for the approximately linear mechanisms 60. The approximately linear mechanisms 60 are called grasshopper mechanisms 60 in the following description.

Each of the grasshopper mechanisms 60 is composed of a first arm 62 having one end rotatably attached to a housing 100C of the Stirling engine 100, a second arm 63 having one end rotatably attached to the housing 100C of the Stirling engine 100 likewise, and a third arm 64 having one end rotatably coupled with an end of the connecting rod 61 and the other end rotatably coupled with the other end of the second arm 63. An end of the connecting rod 61, which is different from the end thereof rotatably attached to the crank shaft 110, is rotatably coupled with an end of the third arm 64. Further, the other end of the first arm 62 is rotatably coupled between both the ends of the third arm 64.

The high temperature side piston 20H and the low temperature side piston 20L can be approximately linearly reciprocated by use of the grasshopper mechanisms 60. As a result, since the side force Fs of the piston 20 becomes almost 0, the piston 20 can be sufficiently supported even by the gas bearing GB having a small load capability. Note that the approximately linear mechanism for supporting the piston 20 is not limited to the grasshopper mechanism, and a watts link and the like may be used.

Since the grasshopper mechanisms 60 can obtain the same linear motion accuracy by a size smaller than that of other linear approximation mechanisms, the grasshopper mechanisms 60 are advantageous in that the Stirling engine 100 can be made compact in its entirety. In particular, when a Stirling engine is installed in a limited space as in a case in which the Stirling engine 100 is used to recover exhaust heat from an internal combustion engine mounted on a vehicle and the heat exchanger 108 is disposed in an exhaust gas path of the internal combustion engine, a degree of freedom of installation can be improved when the Stirling engine 100 is compact in its entirety. Since the weight of the grasshopper mechanism 60 for obtaining the same linear motion accuracy is smaller than that of the other mechanisms, the grasshopper mechanism 60 is advantageous to improve heat efficiency. Further, since the grasshopper mechanism 60 is relatively simply configured, the grasshopper mechanism 60 is advantageous in that it can be easily manufactured and assembled and can reduce also a manufacturing cost.

As illustrated in FIG. 1, components such as the high temperature side piston 20H, the connecting rod 61, and the crank shaft 110 which constitute the Stirling engine 100 are accommodated in the housing 100C. The housing 100C includes a crank case 114A, the cylinder blocks 30HB, 30LB, and a housing reinforcing member 114B.

In the embodiment, the crank case 114A, which constitutes the housing 100C of the Stirling engine 100, is filled with a gas. In the embodiment, the gas is the same as the working fluid of the Stirling engine 100. The gas filled in the crank case 114A is pressurized by a pump 115 as a pressure adjustment unit. The pump 115 may be driven by, for example, an internal combustion engine as an exhaust heat recovery target of the Stirling engine 100 or may be driven by, for example, a drive means such as a motor.

When a temperature difference is the same between the heater 105 and the cooler 107, since a higher average pressure of the working fluid more increases a pressure difference between a high temperature side and a low temperature side, the Stirling engine 100 can obtain a higher output. The Stirling engine 100 is configured such that the working fluids in the high temperature side working space MSH and the low temperature side working space MSL are kept at a high pressure by pressurizing the gas filled in the crank case 114A by the Stirling engine 100 so that a larger output can be taken out from the Stirling engine 100. As a result, even when only a low quality heat source can be used as in an exhaust heat recovery, a larger output can be taken out from the Stirling engine 100. The output of the Stirling engine 100 is increased approximately in proportion to a pressure of the gas filled in the crank case 114A.

In the Stirling engine 100, a seal bearing 116 is attached to the crank case 114A, and the crank shaft 110 is supported by the seal bearing 116. Although the Stirling engine 100 pressurizes the gas filled in the crank case 114A, a leakage of the gas filled in the housing 100C can be minimized by the seal bearing 116. The output from the crank shaft 110 is taken out to the outside of the crank case 114A through a flexible coupling 119 such as, for example, an Oldham's coupling. Note that a magnetic coupling, which is coupled with the crank shaft 110, may be disposed between an inside and an outside of the crank case 114A, and the output of the crank shaft 110 may be taken out to the outside of the crank case 114A through the magnetic coupling.

As illustrated in FIGS. 1 and 2, in the embodiment, the gas bearings GB are formed by blowing a gas (in the embodiment, air which is the same as the working fluid) A from gas supply openings HE formed around side peripheral portions of the high temperature side piston 20H and the low temperature side piston 20L. As illustrated in FIGS. 1 and 2, a high temperature side piston internal space 20HI and a low temperature side piston internal space 20LI are formed in the high temperature side piston 20H and the low temperature side piston 20L, respectively.

A gas introduction port HI is disposed to the high temperature side piston 20H to supply the gas A into the high temperature side piston internal space 20HI, and a gas introduction port HI is disposed to the low temperature side piston 20L to supply the gas A into the low temperature side piston internal space 20LI. A gas supply pipe 118 is connected to each of the gas introduction ports HI. One end of the gas supply pipe 118 is connected to a gas bearing pump 117 and introduces the gas A ejected from the gas bearing pump 117 into the high temperature side piston internal space 20HI and the low temperature side piston internal space 20LI.

The gas A, which is introduced into the high temperature side piston internal space 20HI and the low temperature side piston internal space 20LI, flows out from the gas supply openings HE formed around the side peripheral portions of the high temperature side piston 20H and the low temperature side piston 20L and forms the gas bearings GB. Note that although the gas bearings GB are static pressure gas bearings, a structure of the gas bearings GB is not limited to the static pressure gas bearings and may be dynamic pressure gas bearings in the embodiment.

Further, the gas bearings GB may be formed by forming gas taking-in ports to apex surfaces of the high temperature side piston 20H and the low temperature side piston 20L and taking in the gas A as the working fluid from the gas taking-in ports into the high temperature side piston internal space 20HI and the low temperature side piston internal space 20LI and flows out the gas A from the gas supply openings HE. Note that although the gas bearings GB of the embodiment are the static pressure gas bearings, the dynamic pressure gas bearings may be used.

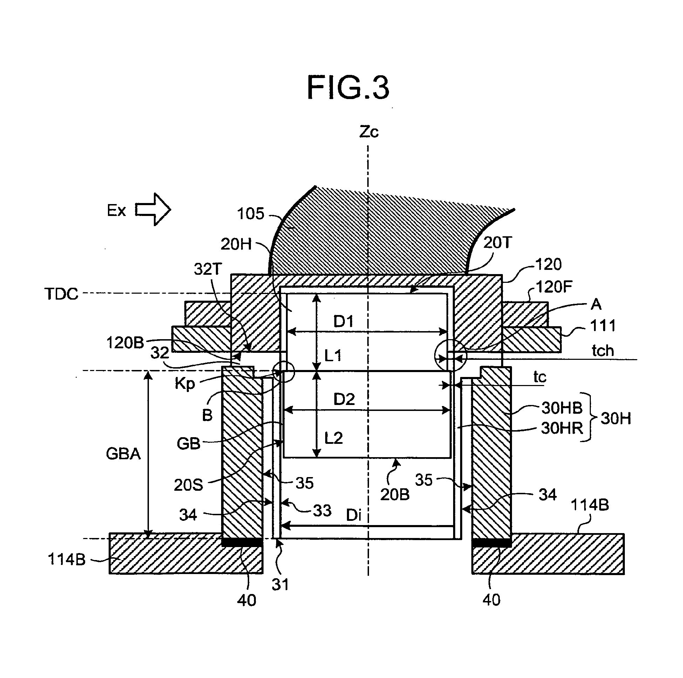

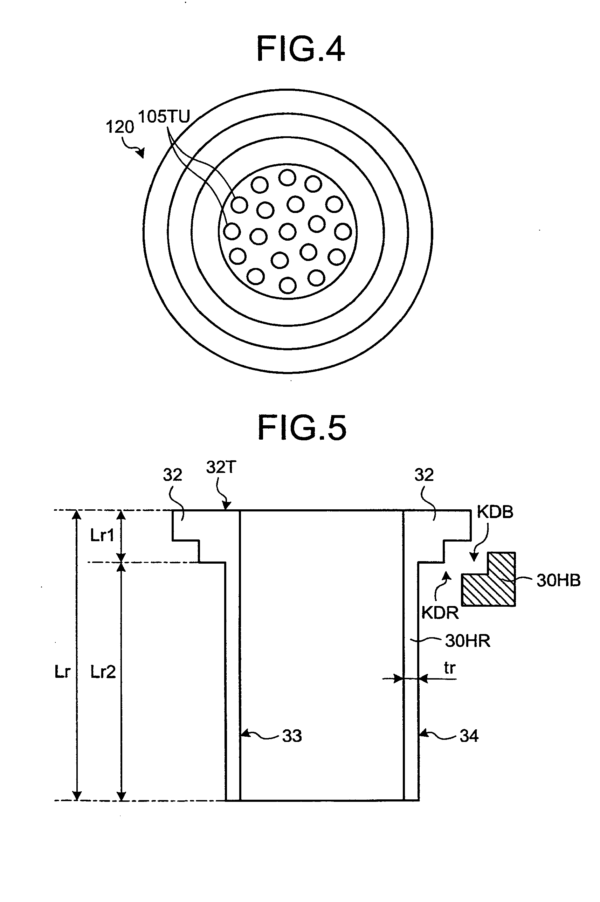

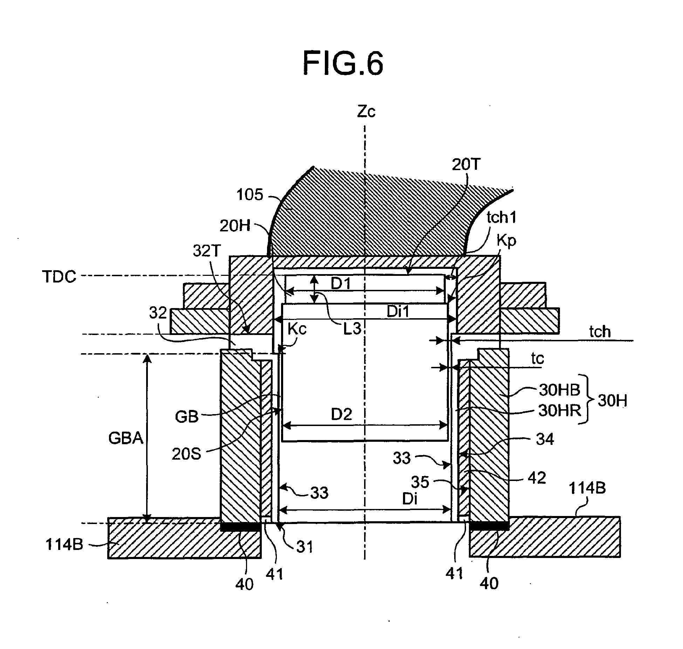

FIG. 3 is an explanatory view illustrating a configuration of the high temperature side cylinder included in the Stirling engine as the piston engine according to the embodiment. FIG. 4 is a plan view of the heater/cylinder coupling member when it is viewed from a high temperature side working space side. FIG. 5 is a sectional view of the sleeve configuring the high temperature side piston. FIG. 6 is an explanatory view illustrating another configuration of the high temperature side cylinder included in the Stirling engine as the piston engine according to the embodiment. FIGS. 3 to 6 illustrate the high temperature side piston 20H and the high temperature side cylinder 30H of the Stirling engine 100 illustrated in FIG. 1. Note that FIGS. 3 and 6 illustrate a state that the high temperature side piston 20H is located at a Top Dead Center (TDC: Upper Dead Point).

An apex surface 20T of the high temperature side piston 20H is thermally expanded in contact with the high temperature working fluid heated by the heater 105. Since the Stirling engine 100 illustrated in FIG. 1 forms the gas bearing GB between the high temperature side piston 20H and the sleeve 30HR that constitutes the high temperature side cylinder 30H, the clearance tc between the high temperature side piston 20H and the sleeve 30HR is set a small size of several microns to several tens of microns. Accordingly, when the high temperature side piston 20H thermally expands in a diameter direction, there is a possibility that the high temperature side piston 20H is in contact with the sleeve 30HR of the high temperature side cylinder 30H.

In the embodiment, a diameter D1 in a portion of a distance L1 from the apex surface 20T of the high temperature side piston 20H to a predetermined position Kp is made smaller than a diameter D2 in a portion of a distance L2 from the predetermined position Kp to a counter apex surface side end 20B. With this configuration, a clearances tch (a portion illustrated by A of FIG. 3) from the apex surface 20T of the high temperature side piston 20H to the predetermined position Kp between the high temperature side piston 20H and the sleeve 30HR of the high temperature side cylinder 30H is made larger than the clearance tc from the predetermined position Kp of the high temperature side piston 20H to the counter apex surface side end 20B between the high temperature side piston 20H and an inner peripheral surface 33 of the sleeve 30HR of the high temperature side cylinder 30H. Since an inside diameter of the sleeve 30HR of the high temperature side cylinder 30H is Di, the clearance tch is (Di - D1)/2, and the clearance tc is (Di - D2)/2. With this configuration, even if a vicinity of the apex surface 20T of the high temperature side piston 20H thermally expands in the diameter direction, a contact between the high temperature side piston 20H and the sleeve 30HR of the high temperature side cylinder 30H can be avoided. The predetermined position Kp described above is called a piston side stepped portion (a portion illustrated by B of FIG. 3).

In the embodiment, when the high temperature side piston 20H reaches the TDC, the high temperature side piston 20H enters up to the inside of the heater/cylinder coupling member 120. In a configuration illustrated in FIG. 6, a distance L3 from the apex surface 20T of the high temperature side piston 20H to the piston side stepped portion Kp is made smaller than the distance L1 from the apex surface 20T in the high temperature side piston 20H to the piston side stepped portion Kp illustrated in FIG. 3. Accordingly, in the high temperature side piston 20H illustrated in FIG. 3, the piston side stepped portion Kp does not enter up to the inside of the heater/cylinder coupling member 120 in the TDC. In contrast, in the high temperature side piston 20H illustrated in FIG. 6, the piston side stepped portion Kp enters up to the inside of the heater/cylinder coupling member 120 in the TDC. Accordingly, in the configuration illustrated in FIG. 6, there is a possibility that the high temperature side piston 20H is in contact with the heater/cylinder coupling member 120 in the TDC by the thermal expansion of the high temperature side piston 20H in the diameter direction.

To avoid the contact, in the configuration in which the piston side stepped portion Kp enters up to the inside of the heater/cylinder coupling member 120 in the TDC, an inside diameter Di1 of the heater/cylinder coupling member 120 may be formed larger than the inside diameter Di of the sleeve 30HR of the high temperature side cylinder 30H as illustrated in FIG. 6. With this configuration, a clearance tch1 from the apex surface 20T of the high temperature side piston 20H to the piston side stepped portion Kp between the high temperature side piston 20H and the heater/cylinder coupling member 120 is made larger than the clearance tc between a side peripheral surface 20S of the high temperature side piston 20H and the inner peripheral surface 33 of the sleeve 30HR of the high temperature side cylinder 30H. The clearance tch1 is (Di1 - D1)/2, and the clearance tc is (Di - D2)/2. With this configuration, even if the vicinity of the apex surface 20T of the high temperature side piston 20H thermally expands in the diameter direction, the contact between the high temperature side piston 20H and the heater/cylinder coupling member 120 can be avoided.

While the Stirling engine 100 illustrated in FIG. 1 is in operation, the working fluid, which is heated by the heater 105 by, for example, the exhaust gas Ex of the internal combustion engine, is in contact with the apex surface 20T of the high temperature side piston 20H as a heat medium as described above. The heat of the working fluid flows from the apex surface 20T of the high temperature side piston 20H to the side peripheral surface 20S connecting to the apex surface with a result that, when the Stirling engine 100 is in operation, a temperature of the high temperature side piston 20H increases in comparison with that a case that the Stirling engine 100 stops. Accordingly, when the Stirling engine 100 is in operation, the high temperature side piston 20H expands in the diameter direction from the apex surface 20T to the counter apex surface side end 20B.

In contrast, an outside of the high temperature side cylinder 30H, in which the high temperature side piston 20H is accommodated, is in contact with outside air. Accordingly, a temperature of an outside of the high temperature side cylinder 30H is made lower than a temperature of an inside of the high temperature side cylinder 30H into which the working fluid flows (that is, than a temperature of the high temperature side working space MSH illustrated in FIG. 1). Accordingly, a temperature of an inner peripheral surface of the high temperature side cylinder 30H, which confronts the side peripheral surface 20S of the high temperature side piston 20H, is made lower than a temperature of the high temperature side piston 20H, and thermal expansion of the high temperature side cylinder 30H in the diameter direction is made smaller than thermal expansion of the high temperature side piston 20H in the diameter direction. As described above, since a difference between the thermal expansion of the high temperature side piston 20H and the thermal expansion of the high temperature side cylinder 30H (hereinafter, called a thermal expansion difference between piston and cylinder) is generated, the clearance between the high temperature side piston 20H and the high temperature side cylinder 30H which was set at first, is reduced and thus there is a possibility that the high temperature side piston 20H is in contact with the high temperature side cylinder 30H.

The embodiment is configured to reduce a difference between the temperature of the high temperature side piston 20H and the temperature of the high temperature side cylinder 30H (hereinafter, called a temperature difference between piston and cylinder). With this configuration, since the thermal expansion difference between piston and cylinder is reduced, a contact between the high temperature side piston 20H and the high temperature side cylinder 30H can be avoided. Next, a configuration for reducing the temperature difference between piston and cylinder will be explained in detail.

In the embodiment, the sleeve 30HR which constitutes the high temperature side cylinder 30H is thermally connected to the heater 105 for heating the working fluid. More specifically, the sleeve 30HR has a structure formed by extending the heater 105. Here, the thermal connection of the sleeve 30HR to the heater 105 means to transfer the heat of the heater 105 to the sleeve 30HR well by connecting the sleeve 30HR to the heater 105 through a heat transfer structure.

The heat transfer structure has a structure, in which a portion for connecting the sleeve 30HR to the heater 105 is composed of a good heat conductor such as a metal material and the sleeve 30HR is connected to the heater 105, and further a structure in which a good heat conductor (for example, a metal paste such as a silver paste and a copper paste) is interposed between the sleeve 30HR and the heater 105. Further, as other heat transfer structures, there are, for example, a structure for connecting the sleeve 30HR to the heater 105 through a material excellent in a heat transfer property interposed therebetween and a structure for connecting the sleeve 30HR to the heater 105 through a heat transfer member composed of a metal material which is a good heat conductor. Further, a structure in which the sleeve 30HR and the heater 105 are composed of the same structural member also corresponds to the heat transfer structure of the embodiment.

With these configurations, the heat of the heater 105 heated by, for example, the exhaust gas Ex is transmitted to the sleeve 30HR by heat transfer. Since the sleeve 30HR is composed of a material having high thermal conductivity such as metal, the heat of the heater 105 is efficiently transmitted to the sleeve 30HR. With this operation, even if heat is radiated to the outside of the sleeve 30HR, since heat is applied to the sleeve 30HR by the heater 105, a temperature drop of the sleeve 30HR is suppressed. As a result, since the temperature difference between piston and cylinder can be reduced, the thermal expansion difference between piston and cylinder is reduced. Since the clearance between the high temperature side piston 20H and the high temperature side cylinder 30H is kept to the set value, a contact between the high temperature side cylinder 30H and the high temperature side piston 20H can be avoided. With this configuration, a function of the gas bearing GB can be stably exhibited.

In the embodiment, the cylinder block 30HB is disposed outside of the sleeve 30HR at a predetermined interval. As described above, the high temperature side cylinder 30H is composed of the double structure in which the cylinder block 30HB is disposed outside of the sleeve 30HR at a predetermined interval. When the predetermined interval is formed between the sleeve 30HR and the cylinder block 30HB, a gas layer (in the embodiment, an air layer) is formed between an outer peripheral surface 34 of the sleeve 30HR and an inner peripheral surface 35 of the cylinder block 30HB as well as the sleeve 30HR is not in contact with the cylinder block 30HB.

Since a heat radiation amount from the sleeve 30HR to the cylinder block 30HB can be greatly suppress by the gas layer, the temperature drop of the sleeve 30HR is suppressed. As a result, since the temperature difference between piston and cylinder can be reduced, the thermal expansion difference between piston and cylinder is reduced. Since the clearance between the high temperature side piston 20H and the high temperature side cylinder 30H is kept to the set value, the contact between the high temperature side piston 20H and the high temperature side cylinder 30H can be avoided. As a result, the function of the gas bearing GB can be stably exhibited.

In the embodiment, a gasket 40 is disposed between the cylinder block 30HB and the housing reinforcing member 114B. With this configuration, the cylinder block 30HB and the housing reinforcing member 114B are hermetically sealed to thereby secure gas tightness of the crank case 114A. Further, the gasket 40 may be provided with a function as an insulation member. With this configuration, since a heat transfer from the cylinder block 30HB to the housing reinforcing member 114B and the crank case 114A is suppressed, a temperature drop of the cylinder block 30HB is suppressed on the housing reinforcing member 114B side. As a result, an advantage can be obtained in that heat radiation from the sleeve 30HR to the cylinder block 30HB can be suppressed on the crank case 114A side of the sleeve 30HR.

With the configuration described above, a counter heater side end 31 of the sleeve 30HR is not in contact with the cylinder block 30HB. Although a temperature of the cylinder block 30HB becomes lower as it is more away from the heater 105, the temperature drop of the sleeve 30HR disposed inside of the cylinder block 30HB through the gas layer is smaller than that of the cylinder block 30HB. Accordingly, a temperature difference between the sleeve 30HR and the cylinder block is maximized in the counter heater side end 31 of the sleeve 30HR. Accordingly, in the embodiment, a heat transfer between the counter heater side end 31 and the cylinder block 30HB is avoided by placing the counter heater side end 31 and the cylinder block 30HB in the non-contact state. With this configuration, the temperature difference between piston and cylinder is reduced by suppressing the temperature drop of the sleeve 30HR.

As illustrated in FIG. 6, a radiation suppressing member 42 having low thermal conductivity may be disposed between the sleeve 30HR and the cylinder block 30HB disposed at the predetermined interval. With this configuration, a heat transfer from the sleeve 30HR to the cylinder block 30HB is suppressed so that the temperature drop of the sleeve 30HR is suppressed. As a result, since the temperature difference between piston and cylinder can be reduced, the thermal expansion difference between piston and cylinder is reduced, and thus the clearance between the high temperature side piston 20H and the high temperature side cylinder 30H is kept to the set value. Further, when a thin metal is used for the sleeve 30HR, the radiation suppressing member 42 can be provided also with a function for keeping a shape of the sleeve 30HR.

Porous ceramic, for example, can be used for the radiation suppressing member 42. When the radiation suppressing member 42 is disposed, it is preferable to attach a positioning member 41 to an end (the counter heater side end) 31 of the sleeve 30HR opposite to the heater 105 side to prevent removal of the radiation suppressing member 42. The positioning member 41 has also a function for positioning the sleeve 30HR at a predetermined position in the cylinder block 30HB when the sleeve 30HR is formed thin in addition to the function for preventing the removal of the radiation suppressing member 42. Accordingly, when the sleeve 30HR is formed thin, it is preferable to dispose the positioning member 41 even when the radiation suppressing member 42 is not used. With this configuration, even when the sleeve 30HR is formed thin, the sleeve 30HR is liable to be kept at the predetermined position in the cylinder block 30HB.

Note that it is preferable to form the positioning member 41 of a non-metal material such as resin, ceramic, having low thermal conductivity to suppress a heat transfer from the sleeve 30HR to the cylinder block 30HB. Further, it is preferable to dispose the positioning member 41 by dividing it in a peripheral direction of the sleeve 30HR. With this configuration, a heat transfer area from the sleeve 30HR to the cylinder block 30HB is reduced so that the heat transfer from the sleeve 30HR to the cylinder block 30HB can be suppressed.

As described above, in the embodiment, the cylinder block 30HB is disposed outside of the sleeve 30HR at the predetermined interval as well as the cylinder block 30HB is not in contact with the sleeve 30HR through metal. With this configuration, the clearance between the high temperature side piston 20H and the high temperature side cylinder 30H is kept to the set value by reducing the temperature difference between piston and cylinder by suppressing the temperature drop of the sleeve 30HR by effectively suppressing the heat transfer from the sleeve 30HR to the cylinder block 30HB.

In the embodiment, the cylinder block 30HB is a structure member for supporting a force (a cylinder axis force) in a direction parallel with a center axis Zc of the high temperature side cylinder 30H, a bending moment acting on the high temperature side cylinder 30H, and the like. Accordingly, the cylinder block 30HB secures a strength by being formed thick to withstand the cylinder axis force and the bending moment. In contrast, the sleeve 30HR receives a pressure of the working fluid existing therein and does not receive the cylinder axis force and the bending moment. Accordingly, it is sufficient to form the sleeve 30HR in a thickness capable of withstanding only the pressure of the working fluid existing therein.

In general, since a cylindrical shape is strong to an internal pressure, even if the cylindrical shape is formed thin, it withstands a considerable internal pressure. Accordingly, the sleeve 30HR can be formed to have a thin wall structure. With this configuration, since a heat capacity of the sleeve 30HR becomes small, a responsiveness to a change of heat transferring from the heater 105 to the sleeve 30HR can be improved. Accordingly, even if a temperature of the working fluid in contact with the high temperature side piston 20H is changed by a temperature change of the heater 105, since a temperature of the sleeve 30HR also promptly changes following the temperature change of the heater 105, the temperature difference between piston and cylinder is promptly reduced. As a result, even if a temperature of the heater 105 changes, the clearance between the high temperature side piston 20H and the high temperature side cylinder 30H is kept to the set value, and the function of the gas bearing GB is securely exhibited.

In the high temperature side cylinder 30H, it is preferable to configure a portion (gas bearing portion) GBA where at least the gas bearing GB can be formed in a double structure in which the cylinder block 30HB is disposed outside of the sleeve 30HR at a predetermined interval. With this configuration, in the gas bearing portion GBA, since the thermal expansion difference between piston and cylinder is reduced by reduction of the temperature difference between piston and cylinder, the clearance between the high temperature side piston 20H and the high temperature side cylinder 30H is kept to a more securely set value, and the function of the gas bearing GB is exhibited.

The gas bearing portion GBA is a portion where the clearance tc (several microns to several tens of microns) is formed between the high temperature side piston 20H and the sleeve 30HR of the high temperature side cylinder 30H in one stroke of the high temperature side piston 20H, the clearance tc being necessary to form the gas bearing GB. In a configuration illustrated in FIG. 3, when the high temperature side piston 20H is located in the TDC in a direction parallel with a center axis (an axis parallel with a center axis of the high temperature side piston 20H) Zc of the high temperature side cylinder 30H, a portion between the piston side stepped portion Kp and the counter heater side end 31 of the sleeve 30HR is the gas bearing portion GBA.

Further, in an example illustrated in FIG. 6, a portion between a cylinder side stepped portion Kc disposed to a sleeve support portion 32 for supporting the sleeve 30HR and the counter heater side end 31 of the sleeve 30HR in a direction parallel with a center axis Zp of the high temperature side piston 20H and a center axis Zc of the high temperature side cylinder 30H is the gas bearing portion GBA. The cylinder side stepped portion Kc is a portion formed when the heater/cylinder coupling member 120 whose inside diameter is more increased than the sleeve 30HR is connected to the sleeve 30HR.

In the embodiment, since the sleeve 30HR is thermally connected to the heater 105 as well as the high temperature side cylinder 30H is configured as the double structure as described above, heat radiation from a side peripheral portion of the high temperature side cylinder 30H where a heat radiation amount to the outside air is maximized is suppressed. With a mutual operation of the thermal connection and the double structure, the clearance between the piston and the cylinder is kept to the set value by reducing the thermal expansion difference between piston and cylinder by reducing the temperature difference between piston and cylinder by effectively suppressing the temperature drop of the sleeve 30HR. As a result, since a contact between the piston and the cylinder can be avoided, the function of the gas bearing GB can be stably exhibited while the Stirling engine 100 is in operation.

Note that when a Stirling engine includes a plurality of cylinders and a plurality of pistons as in the Stirling engine 100 illustrated in FIG. 1, the Stirling engine is composed of a double structure in which at least one cylinder thermally connects a sleeve to a heater as well as a cylinder block is disposed outside of the sleeve at a predetermined interval. In the embodiment, although the above structure is employed to the high temperature side cylinder 30H of the Stirling engine 100 illustrated in FIG. 1 as described above, the structure may be employed to the low temperature side cylinder 30L.

In the embodiment, as illustrated in FIGS. 3, 5, and 6, the sleeve support portion 32 is disposed to an end of the sleeve 30HR on the heater 105 side. In the embodiment, although the sleeve 30HR and the sleeve support portion 32 are integrally configured as the same structural member, the sleeve 30HR and the sleeve support portion 32 may be configured as different structural members, and the sleeve 30HR and the sleeve support portion 32 may be integrated when they are assembled to the Stirling engine 100. In the embodiment, the sleeve 30HR and the sleeve support portion 32 are composed of a good heat conductor, for example, a metal material such as steel and aluminum alloy.

A size of the sleeve 30HR in an axial direction (a direction of the center axis Zc of the cylinder in FIGS. 3 and 6) is Lr2, and a size of the sleeve support portion 32 in the axial direction is Lr1. A size of the sleeve 30HR and the sleeve support portion 32 in the axial direction of the sleeve 30HR is Lr = Lr1 + Lr2.

An end (heater side end) 32T of the sleeve support portion 32 on the side thereof opposite to a side where the sleeve 30HR is disposed is in contact with and thermally connected to a counter heater side end 120B of the heater/cylinder coupling member 120 which constitutes the heater 105. With this configuration, the sleeve 30HR is thermally connected to the heater 105 through the sleeve support portion 32. As described above, since the sleeve support portion 32 is composed of the good heat conductor, the sleeve 30HR is thermally connected to the heater 105.

In the embodiment, the heater 105 is configured by bundling a plurality of tubes through which the working fluid passes. As illustrated in FIG. 4, a plurality of openings 105TU of the tubes are formed to the heater/cylinder coupling member 120. The working fluid flows into and flows out from the sleeve 30HR through the openings 105TU.

The sleeve support portion 32 holds the sleeve 30HR in the cylinder block 30HB at a predetermined interval between the sleeve 30HR and the cylinder block 30HB. In the embodiment, the sleeve support portion 32 is attached to an end of the cylinder block 30HB on the heater 105 side. An end of the cylinder block 30HB on the heater 105 side has an opening as well as a stepped portion KDB is formed to the end. More specifically, a portion of the cylinder block 30HB nearer to the opening has a larger inside diameter.

As illustrated in FIG. 5, a portion of the sleeve support portion 32 attached to the cylinder block 30HB has a stepped portion KDR formed in a shape in conformity with the stepped portion KDB formed to the end of the cylinder block 30HB. When the sleeve support portion 32 is attached to the cylinder block 30HB, the stepped portion KDR of the sleeve support portion 32 is engaged with the stepped portion KDB of the cylinder block 30HB. With this configuration, since the sleeve support portion 32 is positioned to the cylinder block 30HB, the sleeve 30HR is disposed in the cylinder block 30HB at a predetermined interval between the sleeve 30HR and the cylinder block 30HB.

An insulation member may be disposed between the sleeve support portion 32 and the cylinder block 30HB.
With this configuration, since the heat of the heater 105, which is transmitted to the cylinder block 30HB through the sleeve support portion 32, can be suppressed, a ratio of the heat of the heater 105 transmitted to the sleeve 30HR increases. As a result, the temperature difference between piston and cylinder can be more effectively reduced by effectively suppressing the temperature drop of the sleeve 30HR.

A wall thickness tr of the sleeve 30HR in a diameter direction is made smaller than a wall thickness of the sleeve support portion 32 in a diameter direction and a wall thickness of the cylinder block 30HB. When, for example, the temperature of the heater 105 changes, a temperature of the working fluid changes so that the temperature of the high temperature side piston 20H also changes. When the temperature of the heater 105 changes, although a heat transfer amount from the heater 105 to the sleeve 30HR also changes, since a temperature of the sleeve 30HR is liable to increase by reducing the wall thickness tr of the sleeve 30HR, the temperature of the sleeve 30HR changes promptly in response to the heat transfer amount. As a result, the temperature of the high temperature side piston 20H and the temperature of the sleeve 30HR change likewise, a change of the temperature difference between piston and cylinder is suppressed. Accordingly, since a change of the clearance between the high temperature side piston 20H and the sleeve 30HR is suppressed, the Stirling engine 100 can be stably operated.

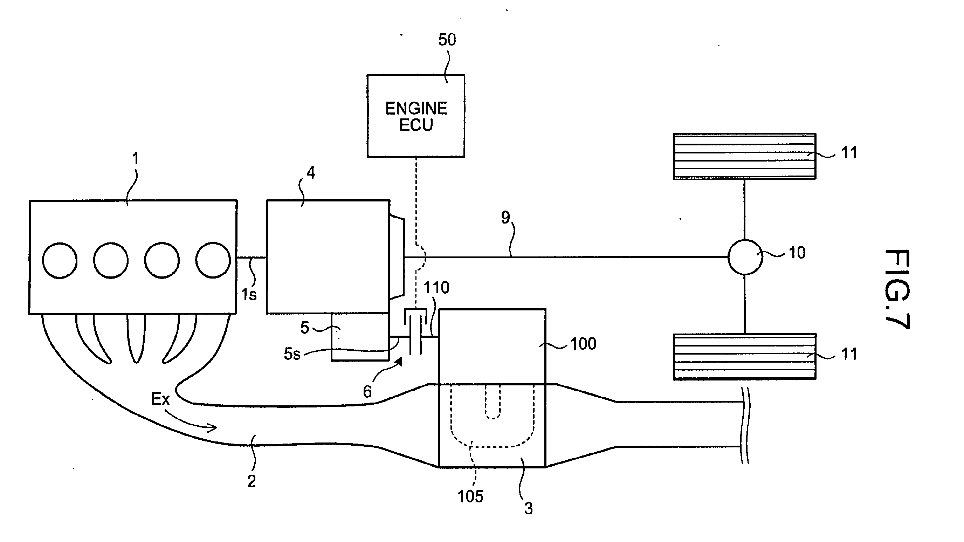

FIG. 7 is a schematic view illustrating a configuration example when the Sterling engine according to the embodiment is used to recover exhaust heat of an internal combustion engine. In the embodiment, an output of the Stirling engine 100 is input to an internal combustion engine transmission 4 through a Stirling engine transmission 5 and taken out after the output is combined with an output of an internal combustion engine 1.

In the embodiment, the internal combustion engine 1 is mounted on a vehicle, for example, a passenger car, a track and the like and acts a power source of the vehicle. The internal combustion engine 1 generates an output as a main power source while the vehicle travels. In contrast, the Stirling engine 100 cannot generate a minimum necessary output unless a temperature of the exhaust gas Ex increases to a certain degree of temperature. Accordingly, in the embodiment, when the temperature of the exhaust gas Ex discharged from the internal combustion engine 1 exceeds a predetermined temperature, the Stirling engine 100 recovers heat energy from the exhaust gas Ex of the internal combustion engine 1 and generates an output and drives the vehicle together with the internal combustion engine 1. As described above, the Stirling engine 100 acts as a subsidiary power source of the vehicle.

The heater 105 included in the Stirling engine 100 is disposed in an exhaust path 2 of the internal combustion engine 1. Note that the regenerator 106 (refer to FIG. 1) of the Stirling engine 100 may be disposed in the exhaust path 2. The heater 105 included in the Stirling engine 100 is disposed in the hollow heater case 3 disposed in the exhaust path 2.

In the embodiment, the heat energy of the exhaust gas Ex recovered using the Stirling engine 100 is converted to motion energy by the Stirling engine 100. A clutch 6 as a power connection/disconnection means is attached to the crank shaft 110 as the output shaft of the Stirling engine 100, and the output of the Stirling engine 100 is transmitted to the Stirling engine transmission 5 through the clutch 6.

The output of the internal combustion engine 1 is input to the internal combustion engine transmission 4 through an output shaft 1s of the internal combustion engine 1. The internal combustion engine transmission 4 combines the output of the internal combustion engine 1 with the output of the Stirling engine 100 which is output from the Stirling engine transmission 5, outputs the combined output to a transmission output shaft 9, and drives drive wheels 11 through a differential gear 10.

The clutch 6 as the power connection/disconnection means is disposed between the internal combustion engine transmission 4 and the Stirling engine 100. In the embodiment, the clutch 6 is disposed between an input shaft 5s of the Stirling engine transmission 5 and the crank shaft 110 of the Stirling engine 100. When the clutch 6 is engaged and disengaged, the clutch 6 mechanically connects and disconnects the crank shaft 110 of the Stirling engine 100 to and from the input shaft 5s of the Stirling engine transmission 5. The clutch 6 is controlled by an engine ECU 50.

When the clutch 6 is engaged, the crank shaft 110 of the Stirling engine 100 is directly coupled with the output shaft 1s of the internal combustion engine 1 through the Stirling engine transmission 5 and the internal combustion engine transmission 4. With this operation, the output generated by the Stirling engine 100 is combined with the output generated by the internal combustion engine 1 by the internal combustion engine transmission 4 and taken out from the transmission output shaft 9. In contrast, when the clutch 6 is disengaged, the output shaft 1s of the internal combustion engine 1 is disconnected from the crank shaft 110 of the Stirling engine 100 and rotates.

The cylinders (at least the high temperature side cylinder) included in the Stirling engine 100 illustrated in FIG. 7 have the structure described above. With this configuration, since the temperatures of the pistons and the cylinders can be kept to the same level, even if the pistons receive heat from the high temperature working fluid and are expanded in the diameter direction, the cylinders are also thermally expanded in the diameter direction likewise the pistons. With this operation, contacts between the pistons and the cylinders can be avoided by suppressing an abrupt reduction of the clearances between the pistons and the cylinders. As a result, even if the Stirling engine 100 mounted on the vehicle receives vibration and the clearances between the pistons and the cylinders change, an influence of abrupt reduction of the clearances between the pistons and the cylinders in the stepped portions, which is caused by the thermal expansion of the pistons toward the diameter directions, is reduced.

As a result, when the Stirling engine 100 is operated while the vehicle travels, since a possibility that the pistons come into contact with the cylinders can be reduced, the Stirling engine 100 can be stably operated as well as deterioration of durability of the pistons and the cylinders can be suppressed. As described above, when the Stirling engine 100 according to the embodiment is used to recover exhaust heat of the internal combustion engine 1 mounted on the vehicle, the exhaust heat can be stably recovered as well as sufficient durability can be secured.

The embodiment described above is the piston engine including the gas bearings interposed between the pistons and the cylinders, and the piston engine includes the sleeves into which the working fluid of the piston engine, which has passed through the heater for heating the working fluid, flows, the sleeves are thermally connected to the heater as well as the outer shells are disposed outside of the sleeves, and the cylinders are composed of the double structure of the sleeves and the outer shells. With this configuration, since the thermal expansion difference between the cylinders and the pistons can be suppressed by reducing the temperature difference between the temperature of the sleeves that constitute the cylinders and the temperature of the pistons, the contact between the cylinders and the pistons can be avoided. Since the clearances between the sleeves and the pistons can be kept to the set value, a function of the gas bearings can be securely exhibited. In particular, in the configuration in which the gas bearings are interposed between the pistons and the cylinders, since the clearances between the pistons and the cylinders are very small, the pistons are liable to come into contact with the cylinders by a thermal expansion of the pistons. However, the embodiment is preferable because the function of the gas bearings can be securely exhibited by suppressing a possibility that the pistons come into contact with the cylinders.

### INDUSTRIAL APPLICABILITY

As described above, the piston engine and the Stirling engine according to the present invention are useful for a piston engine for supporting pistons in cylinders by gas bearings without using piston rings, and in particular suitable to avoid a contact of the pistons with the cylinders.

## Claims

1. A piston engine comprising:
cylinders (30) including sleeves (30HR, 30LR) into which a working fluid flows and which are thermally connected to a heater (105), and outer shells (30HB, 30LB) disposed outside of the sleeves (30HR, 30LR), the working fluid being passed through the heater (105) that heats the working fluid;
pistons (20) that make reciprocating motions in the sleeves (30HR, 30LR) by a pressure change of the working fluid; and
gas bearings (GB) formed between inner peripheral surfaces of the sleeves (30HR, 30LR) and outer peripheral surfaces of the pistons (20), the inner peripheral surfaces of the sleeves (30HR, 30LR) and the outer peripheral surfaces of the pistons (20) being disposed in confrontation with each other, wherein
gas layers are formed between the sleeves (30HR, 30LR) and the outer shells (30HB, 30LB) in portions where the gas bearings (GB) are formed, and the sleeves (30HR, 30LR) are not in contact with the outer shells (30HB, 30LB) through metal.

2. The piston engine according to claim 1, wherein portions where at least the gas bearings (GB) can be formed have a double structure in which the outer shells (30HB, 30LB) are disposed outside of the sleeves (30HR, 30LR).

3. The piston engine according to claim 2, wherein
the sleeves (30HR, 30LR) and the outer shells (30HB, 30LB) are composed of a different structural member, respectively, and sleeve support portions (32) are disposed to ends of the sleeves (30HR, 30LR) on the heater (105) side; and
the sleeves (30HR, 30LR) are attached to the outer shells (30HB, 30LB) by attaching the sleeve support portions (32) to one end of the outer shells (30HB, 30LB), and the sleeves (30HR, 30LR) are coupled with the heater (105).

4. The piston engine according to any one of claims1 to 3, wherein the sleeves (30Hr, 30LR) and the outer shells (30HB, 30LB) are disposed at predetermined intervals.

5. The piston engine according to any one of claims1 to 4, wherein the outer shells (30HB, 30LB) support a force which acts on the cylinders (30) and is in a direction parallel to a center axis of the cylinder, and the sleeves (30HR, 30LR) receive a pressure of the working fluid existing in the sleeves (30HR, 30LR).

6. A Stirling engine (100) with the features of a piston engine according to claim 1, comprising:
a heat exchanger (108) including a heater (105) that heats a working fluid, a regenerator (106) that is connected to the heater (105) and through which the working fluid passes, and a cooler (107) that is connected to the regenerator (106) and cools the working fluid.

7. The Stirling engine (100) according to claim 6, wherein portions where at least the gas bearings (GB) can be formed have a double structure in which the outer shells (30HB, 30LB) are disposed outside of the sleeves (30HR, 30LR).

8. The Stirling engine (100) according to claim 6 or 7, wherein the pistons (20) are supported by approximately linear mechanisms (60).

9. The Stirling engine (100) according to any one of claims 6 to 8, wherein
when the Stirling engine (100) includes a plurality of cylinders (30) and a plurality of pistons (20), at least one of the cylinders (30) thermally connects between the heater (105) and the sleeves (30HR, 30LR); and
at least the one of the cylinders (30) is composed of a double structure having the sleeve and an outer shell disposed outside of the sleeve.

## Patentansprüche

1. Kolbenmotor mit:
Zylindern (30) einschließlich Buchsen (30HR, 30LR), in die ein Arbeitsfluid fließt und die thermisch mit einem Heizer (105) verbunden sind, und äußeren Hülsen (30HB, 30LB), die außerhalb der Buchsen (30HR, 30LR) angeordnet sind, wobei das Arbeitsfluid durch den Heizer (105), der das Arbeitsfluid heizt, geführt wird;
Kolben (20), die Vor- und Zurückbewegungen in den Buchsen (30HR, 30LR) durch eine Druckänderung des Arbeitsfluids machen; und
Gaslagern (GB), die zwischen inneren Umfangsflächen der Buchsen (30HR, 30LR) und äußeren Umfangsflächen der Kolben (20) ausgebildet sind, wobei die inneren Umfangsflächen der Buchsen (30HR, 30LR) und die äußeren Umfangsflächen der Kolben (20) einander gegenüber angeordnet sind, wobei
Gasschichten zwischen den Buchsen (30HR, 30LR) und den äußeren Hülsen (30HB, 30LB) in Abschnitten ausgebildet sind, wo die Gaslager (GB) ausgebildet sind, und die Buchsen (30HR, 30LR) nicht mit den äußeren Hülsen (30HB, 30LB) über Metall verbunden sind.

2. Kolbenmotor nach Anspruch 1, wobei Abschnitte, in denen zumindest die Gaslager (GB) ausgebildet werden können, eine Doppelstruktur haben, in der die äußeren Hülsen (30HB, 30LB) außerhalb der Buchsen (30HR, 30LR) angeordnet sind.

3. Kolbenmotor nach Anspruch 2, wobei
die Buchsen (30HR, 30LR) und die äußeren Hülsen (30HB, 30LB) jeweils aus einem verschiedenen Strukturelement aufgebaut sind, und Buchsenstützabschnitte (32) an Enden der Buchsen (30HR, 30LR) an der Seite des Heizers (105) angeordnet sind; und
die Buchsen (30HR, 30LR) an den äußeren Hülsen (30HB, 30LB) angebracht sind, indem die Buchsenstützabschnitte (32) an einem Ende der äußeren Hülsen (30HB, 30LB) angebracht werden, und die Buchsen (30HR, 30LR) mit dem Heizer (105) gekoppelt sind.

4. Kolbenmotor nach einem der Ansprüche 1 bis 3, wobei die Buchsen (30HR, 30LR) und die äußeren Hülsen (30HB, 30LB) in vorherbestimmten Abständen angeordnet sind.

5. Kolbenmotor nach einem der Ansprüche 1 bis 4, wobei die äußeren Hülsen (30HB, 30LB) eine Kraft unterstützen, die auf die Zylinder (30) wirkt und in eine Richtung parallel zu einer Mittelachse des Zylinders ist, und die Buchsen (30HR, 30LR) einen in den Buchsen (30HR, 30LR) vorhandenen Druck des Arbeitsfluids aufnehmen.

6. Stirlingmotor (100) mit den Merkmalen eines Kolbenmotors nach Anspruch 1, mit:
einem Wärmetauscher (108) mit einem Heizer (105), der ein Arbeitsfluid heizt, einem Regenerator (106), der mit dem Heizer (105) verbunden ist und durch den das Arbeitsfluid verläuft, und einem Kühler (107), der mit dem Regenerator (106) verbunden ist und das Arbeitsfluid kühlt.

7. Stirlingmotor (100) nach Anspruch 6, wobei Abschnitte, in denen zumindest die Gaslager (GB) ausgebildet werden können, eine Doppelstruktur haben, in der die äußeren Hülsen (30HB, 30LB) außerhalb der Buchsen (30HR, 30LR) angeordnet sind.

8. Stirlingmotor (100) nach Anspruch 6 oder 7, wobei die Kolben (20) von annähernd linearen Mechanismen (60) gestützt sind.

9. Stirlingmotor (100) nach einem der Ansprüche 6 bis 8, wobei,
wenn der Stirlingmotor (100) eine Vielzahl von Zylindern (30) und eine Vielzahl von Kolben (20) hat, mindestens einer der Zylinder (30) thermisch zwischen dem Heizer (105) und den Buchsen (30HR, 30LR) verbindet; und
zumindest der eine von den Zylindern (30) aus einer Doppelstruktur aufgebaut ist, die die Buchse und eine außerhalb der Buchse angeordnete äußere Hülse hat.

## Revendications

1. Moteur à piston comprenant :
des cylindres (30) comportant des manchons (30HR, 30LR) dans lesquels circule un fluide de travail et qui sont thermiquement reliés à un dispositif de chauffage (105), et des coquilles externes (30HB, 30LB) disposées à l'extérieur des manchons (30HR, 30LR), le fluide de travail étant passé à travers le dispositif de chauffage (105) qui chauffe le fluide de travail ;
des pistons (20) qui effectuent des mouvements de va-et-vient dans les manchons (30HR, 30LR) par un changement de pression du fluide de travail ; et
des paliers à gaz (GB) formés entre des surfaces périphériques internes des manchons (30HR, 30LR) et des surfaces périphériques externes des pistons (20), les surfaces périphériques internes des manchons (30HR, 30LR) et les surfaces périphériques externes des pistons (20) étant disposées en face les unes des autres, où
des couches de gaz sont formées entre les manchons (30HR, 30LR) et les coquilles externes (30HB, 30LB) dans des parties où les paliers à gaz (GB) sont formés, et les manchons (30HR, 30LR) ne sont pas en contact avec les coquilles externes (30HB, 30LB) à travers du métal.

2. Moteur à piston selon la revendication 1, dans lequel des parties où au moins les paliers à gaz (GB) peuvent être formés ont une structure double dans laquelle les coquilles externes (30HB, 30LB) sont disposées à l'extérieur des manchons (30HR, 30LR).

3. Moteur à piston selon la revendication 2, dans lequel
les manchons (30HR, 30LR) et les coquilles externes (30HB, 30LB) sont composés d'un élément de structure différente, respectivement, et des parties (32) de support de manchon sont disposées à des extrémités des manchons (30HR, 30LR) sur le côté de dispositif de chauffage (105) ; et
les manchons (30HR, 30LR) sont fixés aux coquilles externes (30HB, 30LB) en fixant les parties (32) de support de manchon à une extrémité des coquilles externes (30HB, 30LB), et les manchons (30HR, 30LR) sont couplés au dispositif de chauffage (105).

4. Moteur à piston selon l'une quelconque des revendications 1 à 3, dans lequel les manchons (30Hr, 30LR) et les coquilles externes (30HB, 30LB) sont disposés à des intervalles prédéterminés.

5. Moteur à piston selon l'une quelconque des revendications 1 à 4, dans lequel les coquilles externes (30HB, 30LB) supportent une force qui agit sur les cylindres (30) et qui est dans une direction parallèle à un axe central du cylindre, et les manchons (30HR, 30LR) reçoivent une pression du fluide de travail existant dans les manchons (30HR, 30LR).

6. Moteur Stirling (100) avec les caractéristiques d'un moteur à piston selon la revendication 1, comprenant :
un échangeur de chaleur (108) comportant un dispositif de chauffage (105) qui chauffe un fluide de travail, un régénérateur (106) qui est relié au dispositif de chauffage (105) et à travers lequel passe le fluide de travail, et un refroidisseur (107) qui est relié au régénérateur (106) et qui refroidit le fluide de travail.

7. Moteur Stirling (100) selon la revendication 6, dans lequel des parties où au moins les paliers à gaz (GB) peuvent être formés ont une structure double dans laquelle les coquilles externes (30HB, 30LB) sont disposées à l'extérieur des manchons (30HR, 30LR).

8. Moteur Stirling (100) selon la revendication 6 ou 7, dans lequel les pistons (20) sont supportés par des mécanismes approximativement linéaires (60).

9. Moteur Stirling (100) selon l'une quelconque des revendications 6 à 8, dans lequel
lorsque le moteur Stirling (100) comporte une pluralité de cylindres (30) et une pluralité de pistons (20), au moins l'un des cylindres (30) relie thermiquement le dispositif de chauffage (105) aux manchons (30HR, 30LR) ; et
au moins l'un des cylindres (30) est composé d'une structure double ayant le manchon et une coquille externe disposée à l'extérieur du manchon.
